# EUROPÄISCHE PATENTANMELDUNG

(11) **EP 4 212 357 A1**
(43) Veröffentlichungstag der Anmeldung: **19.07.2023**
(21) Anmeldenummer: 22213647.5
(22) Anmeldetag: 14.12.2022
(51) Int. Cl.: B60C 9/07, B60C 13/00, B60C 17/00

(54) **FAHRZEUGLUFTREIFEN**

(30) Priorität: 14.01.2022 DE 102022200389
(71) Anmelder: Continental Reifen Deutschland GmbH, 30165 Hannover (DE)
(72) Erfinder: Berger, Christoph, 30165 Hannover (DE); Ahmed, Owais, 30165 Hannover (DE)
(74) Vertreter: Continental Corporation

(57) **Zusammenfassung**

Die Erfindung betrifft einen Fahrzeugluftreifen (1), rotierbar um eine Rotationsachse (2), aufweisend:
a) eine Reifenkarkasse (4) mit einem ersten Seitenbereich (5), einem zweiten Seitenbereich (6) und einem dazwischen angeordneten Zentralbereich (7), aufweisend zumindest eine Karkasslage (7) mit einer Vielzahl von gummierten Festigkeitsträgern (9), die sich jeweils durch den ersten Seitenbereich (5), den zweiten Seitenbereich (6) und den Zentralbereich (7) der Reifenkarkasse (4) erstrecken,
b) einen relativ zur Reifenkarkasse (4) radial weiter außen liegenden Laufstreifen (10),
c) eine relativ zur Reifenkarkasse (4) radial weiter innen liegende Reifeninnenschicht (11),
d) Reifenseitenwände (12),
wobei zumindest ein Teil der gummierten Festigkeitsträger (9) der Karkasslage (4) bezogen auf die Umfangsrichtung im ersten Seitenbereich (5) und im zweiten Seitenbereich (6) einen Winkel (14) im Bereich von 80° bis 90° einschließt und im Zentralbereich (7) einen Winkel (15) im Bereich von 5° bis 75° einschließt,
wobei die Reifenseitenwände jeweils einen radial äußeren Seitenwandbereich (21) und einen radial inneren Seitenwandbereich (22) aufweisen, wobei der jeweilige radial innere Seitenwandbereich (22) eine Shore-A-Härte von 65 bis 85 Punkten aufweist und der jeweilige radial äußere Seitenwandbereich (21) eine Shore-A-Härte von 45 bis 70 Punkten aufweist, wobei der jeweilige radial innere Seitenwandbereich (22) eine um mindestens 5 Punkte höhere Shore-A-Härte aufweist als der jeweilige radial äußere Seitenwandbereich (21).

## Beschreibung

Die Erfindung betrifft einen Fahrzeugluftreifen.

Die Erfindung geht aus von einem Fahrzeugluftreifen, rotierbar um eine Rotationsachse, aufweisend:
a) eine Reifenkarkasse mit einem ersten Seitenbereich, einem zweiten Seitenbereich und einem dazwischen angeordneten Zentralbereich, aufweisend zumindest eine Karkasslage mit einer Vielzahl von gummierten Festigkeitsträgern, die sich jeweils durch den ersten Seitenbereich, den zweiten Seitenbereich und den Zentralbereich der Reifenkarkasse erstrecken,
b) einen relativ zur Reifenkarkasse radial weiter außen liegenden Laufstreifen,
c) eine relativ zur Reifenkarkasse radial weiter innen liegende Reifeninnenschicht,
d) Reifenseitenwände,
   wobei zumindest ein Teil der gummierten Festigkeitsträger der Karkasslage bezogen auf die Umfangsrichtung im ersten Seitenbereich und im zweiten Seitenbereich einen Winkel im Bereich von 80° bis 90° einschließt und im Zentralbereich einen Winkel im Bereich von 5° bis 75° einschließt,
   wobei die Reifenseitenwände jeweils einen radial äußeren Seitenwandbereich und einen radial inneren Seitenwandbereich aufweisen.

Die Umfangsrichtung kann insbesondere als eine Umlaufrichtung des Fahrzeugluftreifens bezeichnet werden. Dabei handelt es sich bei der Umlaufrichtung um die Richtung, in die der Fahrzeugluftreifen um die Rotationsachse rotierbar ist.

Aus dem Stand der Technik sind Fahrzeugluftreifen bekannt. Die aus dem Stand der Technik bekannten Fahrzeugluftreifen weisen insbesondere eine Reifenkarkasse mit einem ersten Seitenbereich, einem zweiten Seitenbereich und einem dazwischen angeordneten Zentralbereich auf, wobei die Reifenkarkasse zumindest eine Karkasslage mit einer Vielzahl von gummierten Festigkeitsträgern, die sich jeweils durch den ersten Seitenbereich, den zweiten Seitenbereich und den Zentralbereich der Reifenkarkasse erstrecken, aufweist. Dabei schließt zumindest ein Teil der gummierten Festigkeitsträger der Karkasslage bezogen auf die Umfangsrichtung im ersten Seitenbereich und im zweiten Seitenbereich einen Winkel im Bereich von 80° bis 90° ein und im Zentralbereich einen Winkel im Bereich von 5° bis 75° ein.

Die gemäß dem Stand der Technik in Fahrzeugluftreifen angeordneten Reifenkarkassen sind dabei insbesondere aus einer oder mehrerer Karkasslagen geformt, die jeweils eine Vielzahl von gummierten, das heißt in einer vernetzten Kautschukmischung eingebetteten, Festigkeitsträgern umfassen.

Bei einer radialen Richtung eines Fahrzeugluftreifens handelt es sich um eine Richtung die senkrecht auf der Rotationsachse des Fahrzeugluftreifens steht. Eine radiale Richtung verläuft parallel zu einem Radius eines Luftreifens. Der Radius eines Fahrzeugluftreifens ist der Radius des Kreises, dessen Form der Fahrzeugluftreifen in Umlaufrichtung grundsätzlich folgt, der Radius liegt rechtwinklig zu der Rotationsachse und rechtwinklig zu der Umlaufrichtung. Radial weiter außen bedeutet bezogen auf die Rotationsachse, dass eine erste Komponente des Fahrzeugluftreifens, die radial weiter außen liegt als eine zweite Komponente des Fahrzeugluftreifens, weiter von der Rotationsachse entfernt liegt als die zweite Komponente des Fahrzeugluftreifens. Radial weiter innen bedeutet bezogen auf die Rotationsachse, dass eine erste Komponente des Fahrzeugluftreifens, die radial weiter innen liegt als eine zweite Komponente des Fahrzeugluftreifens, näher zu der Rotationsachse liegt als die zweite Komponente des Fahrzeugluftreifens. Ein radial äußeres Element des Fahrzeugluftreifens liegt also radial weiter außen als ein radial inneres Element des Fahrzeugluftreifens.

In einem aus dem Stand der Technik bekannten, sogenannten Radialreifen verlaufen die gummierten Festigkeitsträger der Karkasslagen im Wesentlichen radial. Dies bedeutet, dass die gummierten Festigkeitsträger über eine gesamte Breite der Karkasse quer zur Umfangsrichtung des Fahrzeugluftreifens mit der Umfangsrichtung einen Winkel von etwa 90° einschließen. Der entsprechende Winkel kann auch als Kordwinkel der in der Karkasslage vorhandenen Festigkeitsträger bezeichnet werden. Anhand der Definition dieses Kordwinkels in Abhängigkeit von der Umfangsrichtung, ist es für den Fachmann in der Praxis insbesondere möglich, den Kordwinkel, also den relativen Winkel des Festigkeitsträgers zur Umfangsrichtung, zu bestimmen.

Die Karkasse des erfindungsgemäßen Fahrzeugluftreifens weist drei Bereiche auf: einen ersten Seitenbereich, einen Zentralbereich und einen zweiten Seitenbereich. Hierbei kann der Zentralbereich zweckmäßigerweise der Bereich der Reifenkarkasse sein, der im Fahrzeugluftreifen unterhalb des Laufstreifens angeordnet ist, wohingegen der erste und zweite Seitenbereich beispielsweise die Karkasse im Bereich der Flanken oder Seiten des Fahrzeugluftreifens bilden.

Der Zentralbereich liegt radial weiter innen als der Laufstreifen.

Erfindungsgemäß wird im Fahrzeugluftreifen nämlich von einer streng radialen Konstruktion abgewichen, indem nämlich lediglich in dem ersten und zweiten Seitenbereich eine weitgehend radiale Anordnung der Festigkeitsträger, also mit einem Kordwinkel von 80° bis 90°, eingestellt wird. Innerhalb des Zentralbereichs der Karkasse wird hingegen ein Kordwinkel im Bereich von 5° bis 75° eingestellt, so dass eine Reifenkarkasse erhalten wird, die als teilweise gewinkelte Reifenkarkasse bezeichnet werden kann. Ein Kordwinkel von 5° bis 75° bedeutet, dass die gummierten Festigkeitsträger der Reifenkarkasse einen Winkel von 5° bis 75° mit der Umfangsrichtung oder der Umlaufrichtung einschließen.

Diese aus dem Stand der Technik bekannten Fahrzeugluftreifen, bei denen Innerhalb des Zentralbereichs der Karkasse Kordwinkel im Bereich von 5° bis 75° eingestellt sind, weisen eine ausreichende mechanische Stabilität auf. Ausreichend stabil bedeutet insbesondere, dass der Fahrzeugluftreifen den Beanspruchungen während eines regulären Betriebs des Fahrzeugluftreifens standhalten kann. Für den Fall eines irregulären Betriebs, also eines Betriebs des Fahrzeugluftreifens außerhalb von für ihn vorgesehenen Betriebsparametern, könnte eine weitergehende mechanische Stabilisierung des Fahrzeugluftreifens erforderlich sein. Bei einem irregulären Betrieb könnte der zuvor beschriebene Fahrzeugluftreifen derartigen Beanspruchungen ausgesetzt werden, die zu einer Schädigung des Fahrzeugluftreifens führen könnten oder die zu einer Beeinträchtigung der Fahreigenschaften des Fahrzeugluftreifens führen könnten. Zur Bewirkung einer weitergehenden mechanischen Stabilisierung könnte es erforderlich sein, dass die Seitwandbereiche der Reifenseitenwände bestimmte physikalische Eigenschaften aufweisen. Diese aus dem Stand der Technik bekannten Fahrzeugluftreifen könnten, bei sichergestellter ausreichender mechanischer Stabilität, hinsichtlich einer möglichen Anwendung von Material, das für den Bau und die Herstellung des Fahrzeugluftreifens erforderlich ist, nicht optimal ausgebildet sein.

Der Erfindung liegt daher die Aufgabe zugrunde einen Fahrzeugluftreifen bereitzustellen, der eine über die grundsätzlich ausreichende mechanische Stabilität hinausgehende Stabilität aufweist und bei dem die Anwendung von Material, das für den Bau und die Herstellung des Fahrzeugluftreifens erforderlich ist, optimal ausgebildet ist.

Gelöst wird die erfindungsgemäß gestellte Aufgabe dadurch, dadurch gekennzeichnet, dass der jeweilige radial innere Seitenwandbereich eine Shore-A-Härte von 65 bis 85 Punkten aufweist und der jeweilige radial äußere Seitenwandbereich eine Shore-A-Härte von 45 bis 70 Punkten aufweist, wobei der jeweilige radial innere Seitenwandbereich eine um mindestens 5 Punkte höhere Shore-A-Härte aufweist als der jeweilige radial äußere Seitenwandbereich. Bei den Shore-A-Härte Punkten, handelt es sich um Punkte der Shore-A-Härte Skala.

Durch den erfindungsgemäßen Umstand, wonach, der jeweilige radial innere Seitenwandbereich eine Shore-A-Härte von 65 bis 85 Punkten aufweist und der jeweilige radial äußere Seitenwandbereich eine Shore-A-Härte von 45 bis 70 Punkten aufweist, wobei der jeweilige radial innere Seitenwandbereich eine um mindestens 5 Punkte höhere Shore-A-Härte aufweist als der jeweilige radial äußere Seitenwandbereich, wird eine ausreichende mechanische Stabilität sichergestellt. Ausreichend ist die mechanische Stabilität insbesondere dann, wenn der Fahrzeugluftreifen während eines Regelbetriebs nicht aufgrund einer mechanischen Instabilität beschädigt wird. Der Fahrzeugluftreifen wird dann im Regelbetrieb genutzt, wenn er beispielsweise in einem für ihn vorgesehen Druckbereich und bei vorgesehen Abrollgeschwindigkeiten genutzt wird. Insbesondere wird bei einem Fahrzeugluftreifen, der die erfindungsgemäß konstruierte und ausgelegte Reifenkarkasse aufweist, eine ausreichende mechanische Stabilität sichergestellt und insbesondere für den Fall eines irregulären Betriebs des Fahrzeugluftreifens die Wahrscheinlichkeit einer Beschädigung des Fahrzeugluftreifens verringert. Ferner ist eine Ausgestaltung des Fahrzeugluftreifens, wonach auch sämtliche Seitenwandbereiche eine gleich hohe Shore-A-Härte aufweisen, nicht erforderlich.

Somit wird insgesamt ein verbesserter Fahrzeugluftreifen bereitgestellt, bei dem die Anwendung von Material, das für den Bau und die Herstellung des Fahrzeugluftreifens erforderlich ist, optimal ausgebildet ist.

Bei dem Fahrzeugluftreifen handelt es sich beispielsweise um einen PKW-Reifen oder einen LKW-Reifen oder einen Zweirad-Reifen.

Weitere vorteilhafte Ausgestaltungsformen der vorliegenden Erfindung sind Gegenstand der Unteransprüche.

Gemäß einer vorzugsweisen Ausgestaltungsform der vorliegenden Erfindung schließt zumindest ein Teil der gummierten Festigkeitsträger der Karkasslage bezogen auf die Umfangsrichtung des Fahrzeugluftreifens im ersten Seitenbereich und im zweiten Seitenbereich einen Winkel im Bereich von 85° bis 90°, bevorzugt im Bereich von 88° bis 90°, ein. Bei diesem Winkel handelt es sich um den Winkel der gummierten Festigkeitsträger zu der Umfangsrichtung.

Gemäß einer nächsten vorzugsweisen Ausgestaltungsform der vorliegenden Erfindung schließt zumindest ein Teil der gummierten Festigkeitsträger der Karkasslage bezogen auf die Umfangsrichtung des Fahrzeugluftreifens im Zentralbereich einen Winkel im Bereich von 10° bis 70°, bevorzugt im Bereich von 15° bis 55°, besonders bevorzugt im Bereich von 20° bis 35°, ein. Bei diesem Winkel handelt es sich um den Winkel der gummierten Festigkeitsträger zu der Umfangsrichtung.

Gemäß einer nächsten vorzugsweisen Ausgestaltungsform der vorliegenden Erfindung ist der Laufstreifen in radial nach außen weisender Richtung zumindest teilweise, bevorzugt vollständig, oberhalb des Zentralbereichs angeordnet.

Gemäß einer nächsten vorzugsweisen Ausgestaltungsform der vorliegenden Erfindung liegt der Quotient aus der Breite der Aufstandsfläche und der Breite des Zentralbereichs, jeweils quer zur Umfangsrichtung des Fahrzeugluftreifens, im Bereich von 0,7 bis 2, bevorzugt im Bereich von 0,8 bis 1,6, besonders bevorzugt im Bereich von 0,9 bis 1,2 und ganz besonders bevorzugt im Bereich von 0,95 bis 1,05.

Bei einer Erstreckung quer zur Umfangsrichtung handelt es sich um eine Erstreckung parallel zu der Rotationsachse und rechtwinklig zu der Umfangsrichtung.

Gemäß einer nächsten vorzugsweisen Ausgestaltungsform der vorliegenden Erfindung umfasst die Reifenkarkasse zwei oder mehr Karkasslagen, wobei in jeder Karkasslage zumindest ein Teil der gummierten Festigkeitsträger, bevorzugt sämtliche gummierten Festigkeitsträger, bezogen auf die Umfangsrichtung des Fahrzeugluftreifens im ersten Seitenbereich und im zweiten Seitenbereich einen Winkel im Bereich von 80° bis 90° und im Zentralbereich einen Winkel im Bereich von 5° bis 75° einschließt. Bei diesem Winkel handelt es sich um den Winkel der gummierten Festigkeitsträger zu der Umfangsrichtung.

Gemäß einer nächsten vorzugsweisen Ausgestaltungsform der vorliegenden Erfindung umfasst die Reifenkarkasse zwei Karkasslagen, wobei die gummierten Festigkeitsträger der beiden Karkasslagen im Zentralbereich relativ zueinander einen Winkel im Bereich von 30° bis 90°, bevorzugt im Bereich von 40° bis 80°, besonders bevorzugt im Bereich von 50° bis 70°, ganz besonders bevorzugt im Bereich von 55° bis 65°, einschließen.

Durch den erfindungsgemäßen Umstand, wonach umfasst die Reifenkarkasse zwei Karkasslagen umfasst, wobei die gummierten Festigkeitsträger der beiden Karkasslagen im Zentralbereich relativ zueinander einen Winkel im Bereich von 30° bis 90°, bevorzugt im Bereich von 40° bis 80°, besonders bevorzugt im Bereich von 50° bis 70°, ganz besonders bevorzugt im Bereich von 55° bis 65°, einschließen wird ein Kreuzverband der beiden Karkasslagen bewirkt. Dieser Kreuzverband führt zu einer Erhöhung der mechanischen Stabilität des Fahrzeugluftreifens.

Gemäß einer nächsten vorzugsweisen Ausgestaltungsform der vorliegenden Erfindung ist im Fahrzeugluftreifen zwischen dem Laufstreifen und der Reifenkarkasse zumindest eine weitere Lage, bevorzugt genau eine weitere Lage, angeordnet.
Bei der weiteren Lage kann es sich beispielsweise um einen Gürtel des Fahrzeugluftreifens oder um eine Cap Ply des Fahrzeugluftreifens handeln.

Gemäß einer nächsten vorzugsweisen Ausgestaltungsform der vorliegenden Erfindung ist zumindest eine der weiteren Lagen eine Gürtellage, wobei die weitere Lage bevorzugt gummierte Festigkeitsträger umfasst, die besonders bevorzugt bezogen auf die Umfangsrichtung des Fahrzeugluftreifens einen Winkel im Bereich von 10° bis 70°, weiter bevorzugt im Bereich von 15° bis 55°, noch weiter bevorzugt im Bereich von 20° bis 35°, einschließen. Bei diesem Winkel handelt es sich um den Winkel der gummierten Festigkeitsträger zu der Umfangsrichtung.

Gemäß einer nächsten vorzugsweisen Ausgestaltungsform der vorliegenden Erfindung ist zumindest eine der weiteren Lagen eine Cap-Ply Lage, wobei die weitere Lage bevorzugt gummierte Festigkeitsträger umfasst, die besonders bevorzugt bezogen auf die Umfangsrichtung des Fahrzeugluftreifens einen Winkel im Bereich von 0° bis 5° einschließen.

Gemäß einer nächsten vorzugsweisen Ausgestaltungsform der vorliegenden Erfindung weist der jeweilige radial äußere Seitenwandbereich eine Gummierungsdicke von 1,5 mm bis 5,0 mm auf und/oder der jeweilige radial innere Seitenwandbereich weist eine Gummierungsdicke von 2,0 mm bis 7,0 mm auf.

Gemäß einer nächsten vorzugsweisen Ausgestaltungsform der vorliegenden Erfindung ist der jeweilige radial innere Seitenwandbereich mit dem jeweiligen radial äußeren Seitenwandbereich in einem jeweiligen Kontaktbereich stoffschlüssig verbunden.

Gemäß einer nächsten vorzugsweisen Ausgestaltungsform der vorliegenden Erfindung bildet der jeweilige radial innere Seitenwandbereich mit dem jeweiligen radial äußeren Seitenwandbereich in dem jeweiligen Kontaktbereich einen Stumpfstoß, einen Überlappstoß oder einen inversen Überlappstoß aus.

Der jeweilige Kontaktbereich verläuft jeweils weitestgehend parallel oder insbesondere genau parallel zu der Rotationsachse für den Fall eines Stumpfstoßes.

Die jeweiligen Kontaktbereiche können auch als erster Kontaktbereich und zweiter Kontaktbereich bezeichnet werden.

Im Fall eines Überlappstoßes erstreckt sich insbesondere der erste Kontaktbereich von einem ersten Punkt des ersten Kontaktbereichs zu einem zweiten Punkt des ersten Kontaktbereichs, wobei der erste Punkt radial weiter außen liegt als der zweite Punkt und wobei der erste Punkt bezogen auf einen Reifeninnenraum axial weiter außen liegt als der zweite Punkt.

Im Fall eines Überlappstoßes erstreckt sich insbesondere der zweite Kontaktbereich von einem ersten Punkt des zweiten Kontaktbereichs zu einem zweiten Punkt des zweiten Kontaktbereichs, wobei der erste Punkt radial weiter außen liegt als der zweite Punkt und wobei der erste Punkt bezogen auf einen Reifeninnenraum axial weiter außen liegt als der zweite Punkt.

Radial bezieht sich auf eine Erstreckung parallel zu einem Radius des Fahrzeugluftreifens.

Im Fall eines inversen Überlappstoßes erstreckt sich insbesondere der erste Kontaktbereich von einem ersten Punkt des ersten Kontaktbereichs zu einem zweiten Punkt des ersten Kontaktbereichs, wobei der erste Punkt radial weiter außen liegt als der zweite Punkt und wobei der erste Punkt bezogen auf einen Reifeninnenraum axial weiter innen liegt als der zweite Punkt.

Im Fall eines inversen Überlappstoßes erstreckt sich insbesondere der zweite Kontaktbereich von einem ersten Punkt des zweiten Kontaktbereichs zu einem zweiten Punkt des zweiten Kontaktbereichs, wobei der erste Punkt radial weiter außen liegt als der zweite Punkt und wobei der erste Punkt bezogen auf einen Reifeninnenraum axial weiter innen liegt als der zweite Punkt.

Der erste Punkt und der zweite Punkt des ersten Kontaktbereichs und der erste Punkt und der zweite Punkt des zweiten Kontaktbereichs sind geometrische Orte des ersten Kontaktbereichs beziehungsweise des zweiten Kontaktbereichs.

Gemäß einer nächsten vorzugsweisen Ausgestaltungsform der vorliegenden Erfindung ist in den Reifenseitenwänden eine weitere Komponente angeordnet, wobei die jeweilige weitere Komponente stoffschlüssig mit dem jeweiligen radial äußeren Seitenwandbereich und dem jeweiligen radial inneren Seitenwandbereich stoffschlüssig verbunden ist.

Gemäß einer nächsten vorzugsweisen Ausgestaltungsform der vorliegenden Erfindung weist die jeweilige weitere Komponente eine höhere Shorehärte auf als der jeweilige radial innere Seitenwandbereich und der jeweilige radial äußere Seitenwandbereich.

Gemäß einer nächsten vorzugsweisen Ausgestaltungsform der vorliegenden Erfindung weist die jeweilige weitere Komponente eine Shore-A-Härte von 75 bis 100 Punkten auf, wobei die weitere Komponente eine um mindestens 5 Punkte höhere Shore-A-Härte aufweist als der jeweilige radial innere Seitenwandbereich und eine um mindestens 10 Punkte höhere Shore-A-Härte aufweist als der jeweilige radial äußere Seitenwandbereich.

Die Seitenwandbereiche und die weiteren Komponenten sind insbesondere aus einem Kautschuk oder einem Gummimaterial ausgebildet.

Weitere Vorteile, Merkmale und Einzelheiten, auf die die Erfindung in ihrem Umfang aber nicht beschränkt ist, werden nun anhand der Zeichnungen näher beschrieben.

Es zeigt:
Fig. 1: Eine schematische Darstellung eines erfindungsgemäßen Fahrzeugluftreifens gemäß einer Ausführungsform;
Fig. 2: Eine schematische Darstellung eines Bereichs eines erfindungsgemäßen Fahrzeugluftreifens gemäß einer Ausführungsform;
Fig. 3: Eine schematische Darstellung eines erfindungsgemäßen Fahrzeugluftreifens gemäß einer weiteren Ausführungsform;
Fig. 4: Eine schematische Darstellung eines erfindungsgemäßen Fahrzeugluftreifens gemäß einer weiteren Ausführungsform;
Fig. 5: Eine schematische Darstellung eines erfindungsgemäßen Fahrzeugluftreifens gemäß einer weiteren Ausführungsform;
Fig. 6: Eine schematische Darstellung gummierter Festigkeitsträger von zwei Karkasslagen einer Riefenkarkasse eines erfindungsgemäßen Fahrzeugluftreifens gemäß einer weiteren Ausführungsform;
Fig. 7: Eine schematische Darstellung eines erfindungsgemäßen Fahrzeugluftreifens gemäß einer weiteren Ausführungsform;
Fig. 8: Eine schematische Darstellung eines erfindungsgemäßen Fahrzeugluftreifens gemäß einer weiteren Ausführungsform;
Fig. 9: Eine schematische Darstellung eines erfindungsgemäßen Fahrzeugluftreifens gemäß einer weiteren Ausführungsform.

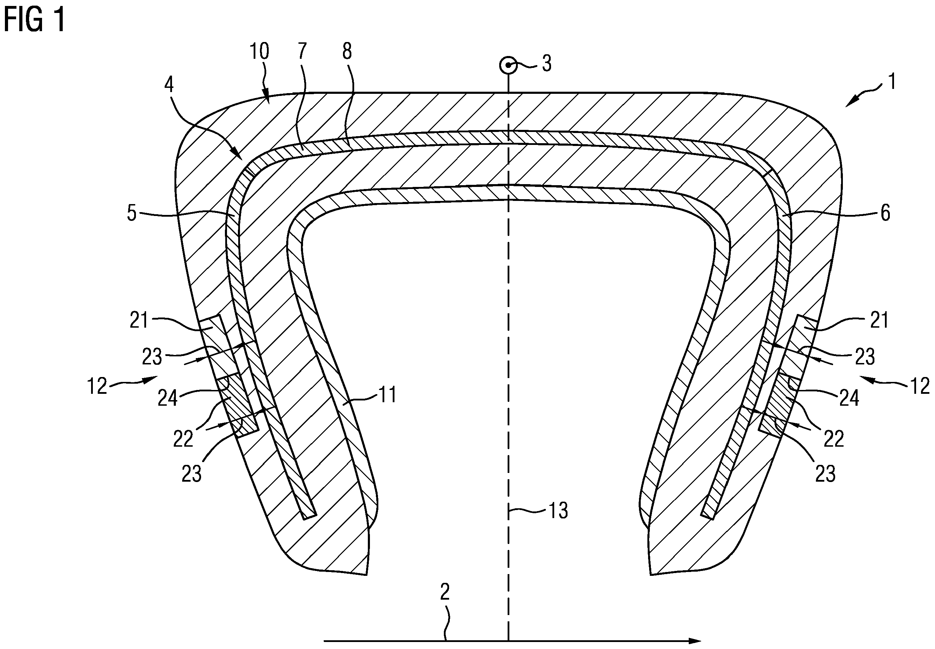

In der Figur 1 ist ein erfindungsgemäßer Fahrzeugluftreifen 1 gemäß einer Ausführungsform schematisch in Radialschnittansicht dargestellt. Der Fahrzeugluftreifen 1 ist um eine Rotationsachse 2 in eine Umlaufrichtung 3 rotierbar. Die Umlaufrichtung 3 kann auch als Umfangsrichtung 3 bezeichnet werden.

Der Fahrzeugluftreifen 1 weist auf:
a) eine Reifenkarkasse 4 mit einem ersten Seitenbereich 5, einem zweiten Seitenbereich 6 und einem dazwischen angeordneten Zentralbereich 7, aufweisend zumindest eine Karkasslage 8 mit einer Vielzahl von gummierten Festigkeitsträgern 9, die sich jeweils durch den ersten Seitenbereich 5, den zweiten Seitenbereich 6 und den Zentralbereich 7 der Reifenkarkasse 4 erstrecken,
b) einen relativ zur Reifenkarkasse 4 radial weiter außen liegenden Laufstreifen 10,
c) eine relativ zur Reifenkarkasse 4 radial weiter innen liegende Reifeninnenschicht 11,
d) Reifenseitenwände 12,
wobei zumindest ein Teil der gummierten Festigkeitsträger 9 der Karkasslage 8 bezogen auf die Umfangsrichtung 3 im ersten Seitenbereich 5 und im zweiten Seitenbereich 6 einen Winkel 14 im Bereich von 80° bis 90° einschließt und im Zentralbereich 7 einen Winkel 15 im Bereich von 5° bis 75° einschließt.

Erfindungsgemäß weisen wobei die Reifenseitenwände 12 jeweils einen radial äußeren Seitenwandbereich 21 und einen radial inneren Seitenwandbereich 22 aufweisen, wobei der jeweilige radial innere Seitenwandbereich 22 eine Shore-A-Härte von 65 bis 85 Punkten aufweist und der jeweilige radial äußere Seitenwandbereich 21 eine Shore-A-Härte von 45 bis 70 Punkten aufweist, wobei der jeweilige radial innere Seitenwandbereich 22 eine um mindestens 5 Punkte höhere Shore-A-Härte aufweist als der jeweilige radial äußere Seitenwandbereich 21.

Der Fahrzeugluftreifen 1 ist achsensymmetrisch hinsichtlich einer Reifenmittenebene 13. Die Reifenseitenwände sind 12 sind daher bezüglich der Reifenmittenebene 13 achsensymmetrisch ausgebildet. Die Reifenmittenebene 13 steht senkrecht zu der Rotationsachse 2. Der geometrische Mittelpunkt und der physikalische Schwerpunkt des Fahrzeugluftreifens liegen insbesondere in der Reifenmittenebene 13.

Insbesondere weisen die Seitenwandbereiche 21 jeweils eine Gummierungsdicke 23 von 1,5 mm bis 5,0 mm auf.

Insbesondere weisen die Seitenwandbereiche 22 jeweils eine Gummierungsdicke 23 von 2,0 mm bis 7,0 mm auf.

Insbesondere kann es sich bei der Gummierungsdicke 23 um eine maximale räumliche Erstreckung der Seitenwandbereiche 21 und 22.

Beispielsweise ist der jeweilige radial innere Seitenwandbereich 22 mit dem jeweiligen radial äußeren Seitenwandbereich 21 in einem jeweiligen Kontaktbereich 24 stoffschlüssig verbunden ist.

Gemäß der Darstellung in der Figur 1 dargestellten Ausführungsform bildet der jeweilige radial äußere Seitenwandbereich 21 mit dem jeweiligen radial inneren Seitenwandbereich 22 in dem jeweiligen Kontaktbereich 24 einen Stumpfstoß aus.

Der jeweilige Kontaktbereich 24 verläuft vorzugsweise weitestgehend parallel oder insbesondere genau parallel zu der Rotationsachse 2 für den Fall eines Stumpfstoßes.

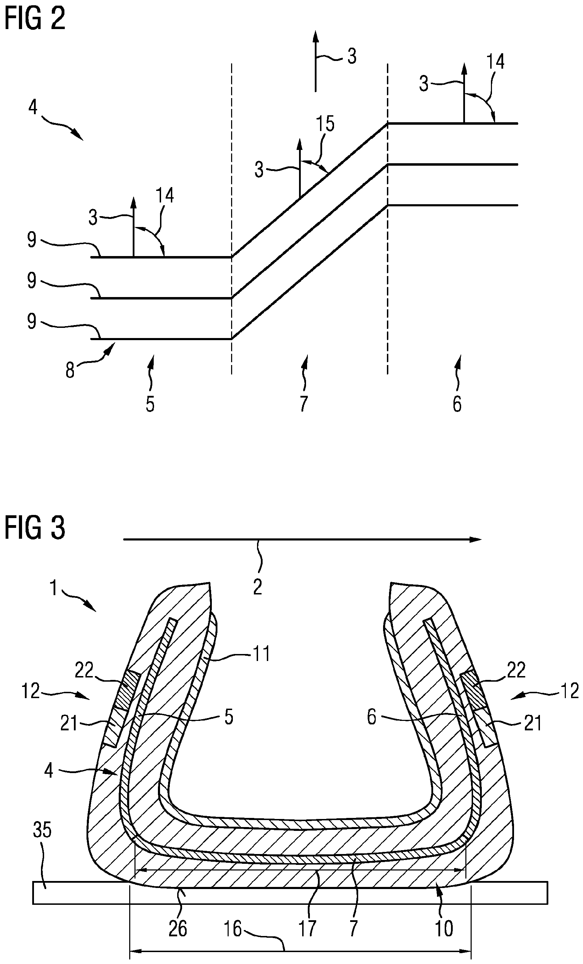

In der Figur 2 ist ein Bereich eines erfindungsgemäßen Fahrzeugluftreifens 1 schematisch dargestellt. Dargestellt ist die Reifenkarkasse 4. Gemäß der Darstellung in der Figur 2 schließt ein Teil der gummierten Festigkeitsträger 9 der Karkasslage 8 bezogen auf die Umfangsrichtung im ersten Seitenbereich 5 und im zweiten Seitenbereich 6 einen Winkel 14 im Bereich von 80° bis 90° einschließt und im Zentralbereich 7 einen Winkel 15 im Bereich von 5° bis 75° einschließt.

In der Figur 3 ist ein erfindungsgemäßer Fahrzeugluftreifen 1 gemäß einer weiteren Ausführungsform schematisch in Radialschnittansicht dargestellt, gemäß der Darstellung in der Figur 3 liegt der Quotient aus der Breite 16 der Aufstandsfläche 26 des Fahrzeugluftreifens 1 auf einer Fahrbahn 35 geteilt durch die Breite 17 des Zentralbereichs 7, jeweils quer zur Umfangsrichtung oder Umlaufrichtung 3, also parallel zur Rotationsachse 2, des Fahrzeugluftreifens 1, im Bereich von 0,7 bis 2, bevorzugt im Bereich von 0,8 bis 1,6, besonders bevorzugt im Bereich von 0,9 bis 1,2, ganz besonders bevorzugt im Bereich von 0,95 bis 1,05.

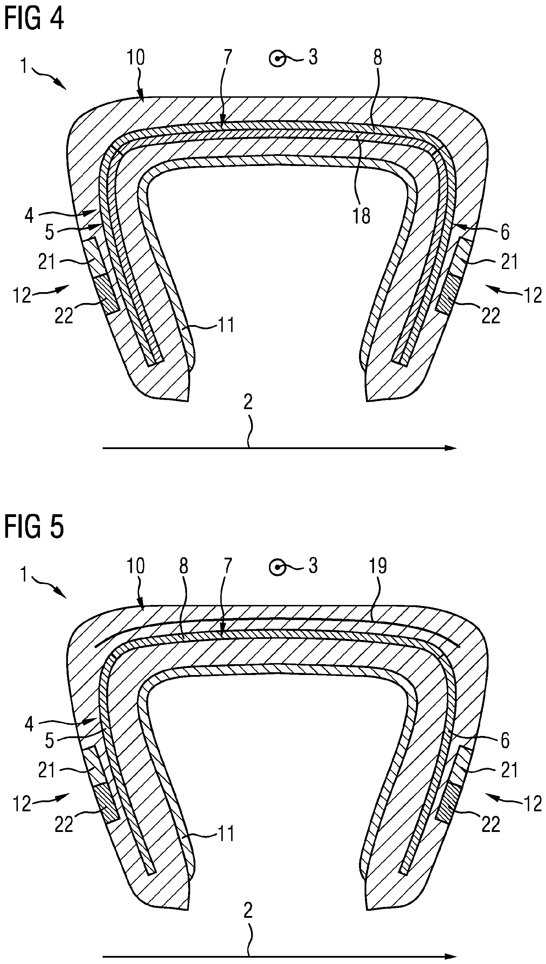

In der Figur 4 ist ein erfindungsgemäßer Fahrzeugluftreifen 1 ein Bereich gemäß einer weiteren Ausführungsform schematisch in Radialschnittansicht dargestellt. Gemäß der Darstellung in der Figur 4 umfasst die Reifenkarkasse 4 zwei Karkasslagen 8 und 18.

In der Figur 5 ist ein erfindungsgemäßer Fahrzeugluftreifen 1 gemäß einer weiteren Ausführungsform schematisch in Radialschnittansicht dargestellt. Gemäß der Darstellung in der Figur 5 ist zwischen dem Laufstreifen 10 und der Reifenkarkasse 4 zumindest eine weitere Lage 19, bevorzugt genau eine weitere Lage 19, angeordnet.

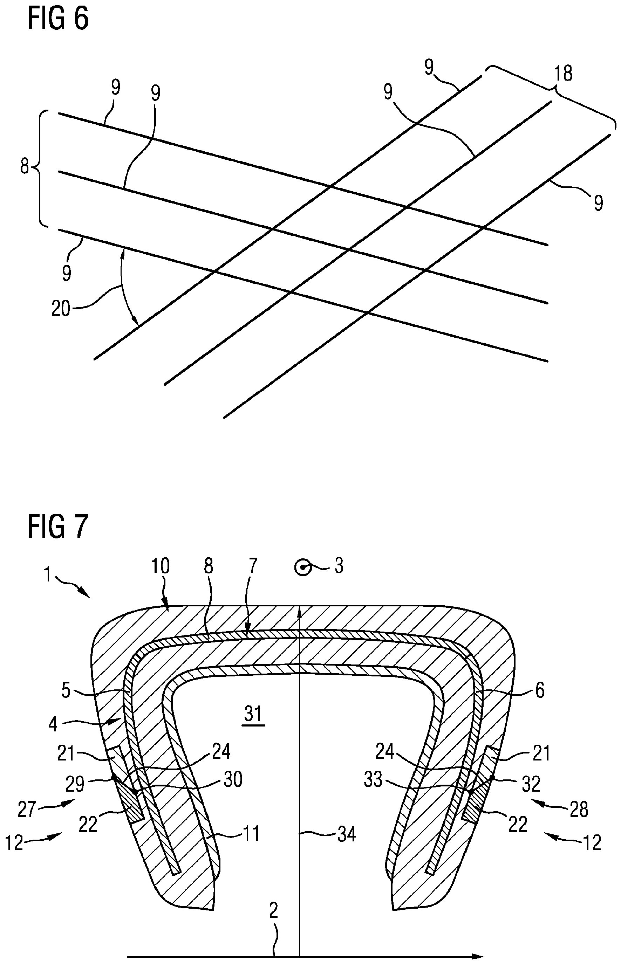

In der Figur 6 sind gummierte Festigkeitsträger 9 entsprechend der in der Figur 4 dargestellten Ausführungsform schematisch dargestellt. Bei den in der Figur 6 dargestellten gummierten Festigkeitsträgern 9 handelt es sich um gummierte Festigkeitsträger 9 der Karkasslagen 8 und 18. Die gummierten Festigkeitsträger 9 der Karkasslage 8 verlaufen parallel zueinander. Die gummierten Festigkeitsträger 9 der Karkasslage 18 verlaufen parallel zueinander.

Die gummierten Festigkeitsträger 9 der beiden Karkasslagen 8, 18 im Zentralbereich 7 schließen relativ zueinander einen Winkel 20 im Bereich von 30° bis 90°, bevorzugt im Bereich von 40° bis 80°, besonders bevorzugt im Bereich von 50° bis 70°, ganz besonders bevorzugt im Bereich von 55° bis 65°, ein.

In der Figur 7 ist ein erfindungsgemäßer Fahrzeugluftreifen 1 gemäß einer weiteren Ausführungsform schematisch in Radialschnittansicht dargestellt. Gemäß der Darstellung in der Figur 7 bildet der jeweilige radial äußere Seitenwandbereich 21 mit dem jeweiligen radial inneren Seitenwandbereich 22 in dem jeweiligen Kontaktbereich 24 einen Überlappstoß aus.

Die jeweiligen Kontaktbereiche 24 können auch als erster Kontaktbereich 27 und als zweiter Kontaktbereich 28 bezeichnet werden.

Im Fall eines Überlappstoßes erstreckt sich insbesondere der erste Kontaktbereichs 27 von einem ersten Punkt 29 des ersten Kontaktbereichs 27 zu einem zweiten Punkt 30 des ersten Kontaktbereichs 27, wobei der erste Punkt 29 radial weiter außen liegt als der zweite Punkt 30 und wobei der erste Punkt 29 bezogen auf einen Reifeninnenraum 31 axial weiter außen liegt als der zweite Punkt 30.

Im Fall eines Überlappstoßes erstreckt sich insbesondere der zweite Kontaktbereich 28 von einem ersten Punkt 32 des zweiten Kontaktbereichs 28 zu einem zweiten Punkt 33 des zweiten Kontaktbereichs 28, wobei der erste Punkt 32 radial weiter außen liegt als der zweite Punkt 33 und wobei der erste Punkt 32 bezogen auf einen Reifeninnenraum 31 axial weiter außen liegt als der zweite Punkt 33.

Radial bezieht sich auf eine Erstreckung parallel zu einem Radius 34 des Fahrzeugluftreifens 1.

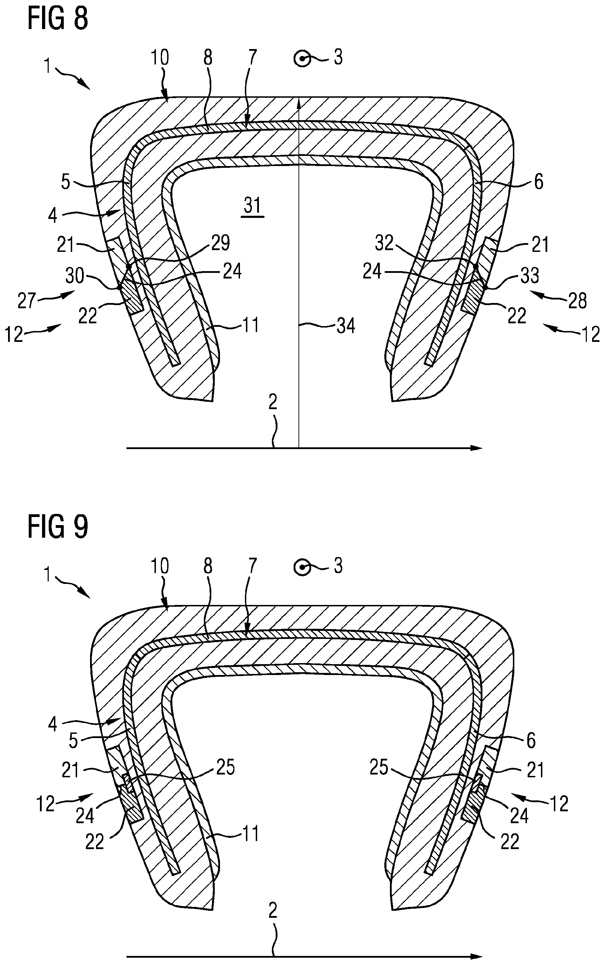

In der Figur 8 ist ein erfindungsgemäßer Fahrzeugluftreifen 1 gemäß einer weiteren Ausführungsform schematisch in Radialschnittansicht dargestellt. Gemäß der Darstellung in der Figur 8 bildet der jeweilige radial äußere Seitenwandbereich 21 mit dem jeweiligen radial inneren Seitenwandbereich 22 in dem jeweiligen Kontaktbereich 24 einen inversen Überlappstoß aus.

Die jeweiligen Kontaktbereiche 24 können auch als erster Kontaktbereich 27 und als zweiter Kontaktbereich 28 bezeichnet werden.

Im Fall eines inversen Überlappstoßes erstreckt sich insbesondere der erste Kontaktbereichs 27 von einem ersten Punkt 29 des ersten Kontaktbereichs 27 zu einem zweiten Punkt 30 des ersten Kontaktbereichs 27, wobei der erste Punkt 29 radial weiter außen liegt als der zweite Punkt 30 und wobei der erste Punkt 29 bezogen auf einen Reifeninnenraum 31 axial weiter innen liegt als der zweite Punkt 30.

Im Fall eines inversen Überlappstoßes erstreckt sich insbesondere der zweite Kontaktbereich 28 von einem ersten Punkt 32 des zweiten Kontaktbereichs 28 zu einem zweiten Punkt 33 des zweiten Kontaktbereichs 28, wobei der erste Punkt 32 radial weiter außen liegt als der zweite Punkt 33 und wobei der erste Punkt 32 bezogen auf einen Reifeninnenraum 31 axial weiter innen liegt als der zweite Punkt 33.

Radial bezieht sich auf eine Erstreckung parallel zu einem Radius 34 des Fahrzeugluftreifens 1.

In der Figur 9 ist ein erfindungsgemäßer Fahrzeugluftreifen 1 gemäß einer weiteren Ausführungsform schematisch in Radialschnittansicht dargestellt. Gemäß der Darstellung in der Figur 9 sind in den Reifenseitenwänden 12 jeweils eine weitere Komponente 25 angeordnet, wobei die jeweilige weitere Komponente 25 stoffschlüssig mit den jeweiligen radial inneren Seitenwandbereichen 22 und stoffschlüssig mit den jeweiligen radial äußeren Seitenwandbereichen 21 verbunden sind.

### Bezugszeichenliste

- 1: Fahrzeugluftreifen
- 2: Rotationsachse
- 3: Umlaufrichtung
- 4: Reifenkarkasse
- 5: Erster Seitenbereich
- 6: Zweiter Seitenbereich
- 7: Zentralbereich
- 8: Karkasslage
- 9: Gummierte Festigkeitsträger
- 10: Laufstreifen
- 11: Reifeninnenschicht
- 12: Reifenseitenwände
- 13: Reifenmittenebene
- 14: Winkel im ersten Seitenbereich oder im zweiten Seitenbereich
- 15: Winkel im Zentralbereich
- 16: Breite der Aufstandsfläche des Fahrzeugluftreifens
- 17: Breite des Zentralbereichs der Reifenkarkasse
- 18: Weitere Karkasslage
- 19: Weitere Lage
- 20: Winkel
- 21: Radial äußerer Seitenwandbereich
- 22: Radial innerer Seitenwandbereich
- 23: Gummierungsdicke
- 24: Kontaktbereich
- 25: Weitere Komponente
- 26: Bodenaufstandsfläche
- 27: Erster Kontaktbereich
- 28: Zweiter Kontaktbereich
- 29: Erster Punkt des ersten Kontaktbereichs
- 30: Zweiter Punkt des ersten Kontaktbereichs
- 31: Reifeninnenraum
- 32: Erster Punkt des zweiten Kontaktbereichs
- 33: Zweiter Punkt des zweiten Kontaktbereichs
- 34: Radius des Fahrzeugluftreifens
- 35: Fahrbahn

## Patentansprüche

1. Fahrzeugluftreifen (1), rotierbar um eine Rotationsachse (2), aufweisend:
a) eine Reifenkarkasse (4) mit einem ersten Seitenbereich (5), einem zweiten Seitenbereich (6) und einem dazwischen angeordneten Zentralbereich (7), aufweisend zumindest eine Karkasslage (7) mit einer Vielzahl von gummierten Festigkeitsträgern (9), die sich jeweils durch den ersten Seitenbereich (5), den zweiten Seitenbereich (6) und den Zentralbereich (7) der Reifenkarkasse (4) erstrecken,
b) einen relativ zur Reifenkarkasse (4) radial weiter außen liegenden Laufstreifen (10),
c) eine relativ zur Reifenkarkasse (4) radial weiter innen liegende Reifeninnenschicht (11),
d) Reifenseitenwände (12),
wobei zumindest ein Teil der gummierten Festigkeitsträger (9) der Karkasslage (4) bezogen auf die Umfangsrichtung im ersten Seitenbereich (5) und im zweiten Seitenbereich (6) einen Winkel (14) im Bereich von 80° bis 90° einschließt und im Zentralbereich (7) einen Winkel (15) im Bereich von 5° bis 75° einschließt,
wobei die Reifenseitenwände jeweils einen radial äußeren Seitenwandbereich (21) und einen radial inneren Seitenwandbereich (22) aufweisen, **dadurch gekennzeichnet, dass** der jeweilige radial innere Seitenwandbereich (22) eine Shore-A-Härte von 65 bis 85 Punkten aufweist und der jeweilige radial äußere Seitenwandbereich (21) eine Shore-A-Härte von 45 bis 70 Punkten aufweist, wobei der jeweilige radial innere Seitenwandbereich (22) eine um mindestens 5 Punkte höhere Shore-A-Härte aufweist als der jeweilige radial äußere Seitenwandbereich (21).

2. Fahrzeugluftreifen (1) nach Anspruch 1, **dadurch gekennzeichnet, dass** zumindest ein Teil der gummierten Festigkeitsträger (9) der Karkasslage (8) bezogen auf die Umfangsrichtung (3) des Fahrzeugluftreifens (1) im ersten Seitenbereich (5) und im zweiten Seitenbereich (6) einen Winkel (14) im Bereich von 85° bis 90°, bevorzugt im Bereich von 88° bis 90°, einschließt.

3. Fahrzeugluftreifen (1) nach einem der Ansprüche 1 oder 2, **dadurch gekennzeichnet, dass** zumindest ein Teil der gummierten Festigkeitsträger (9) der Karkasslage (8) bezogen auf die Umfangsrichtung (3) des Fahrzeugluftreifens (1) im Zentralbereich (7) einen Winkel (15) im Bereich von 10° bis 70°, bevorzugt im Bereich von 15° bis 55°, besonders bevorzugt im Bereich von 20° bis 35°, einschließt.

4. Fahrzeugluftreifen (1) nach einem der vorhergehenden Ansprüche, **dadurch gekennzeichnet, dass** der Laufstreifen (10) in radial nach außen weisender Richtung zumindest teilweise, bevorzugt vollständig, oberhalb des Zentralbereichs (7) angeordnet ist.

5. Fahrzeugluftreifen (1) nach einem der vorhergehenden Ansprüche, **dadurch gekennzeichnet, dass** der Quotient aus der Breite (16) der Aufstandsfläche und der Breite (17) des Zentralbereichs (7), jeweils quer zur Umfangsrichtung (3) des Fahrzeugluftreifens (1), im Bereich von 0,7 bis 2, bevorzugt im Bereich von 0,8 bis 1,6, besonders bevorzugt im Bereich von 0,9 bis 1,2, ganz besonders bevorzugt im Bereich von 0,95 bis 1,05, liegt.

6. Fahrzeugluftreifen (1) nach einem der vorhergehenden Ansprüche, **dadurch gekennzeichnet, dass** die Reifenkarkasse (4) zwei oder mehr Karkasslagen (8, 18) umfasst, wobei in jeder Karkasslage (8, 18) zumindest ein Teil der gummierten Festigkeitsträger (9), bevorzugt sämtliche gummierten Festigkeitsträger (9), bezogen auf die Umfangsrichtung (3) des Fahrzeugluftreifens (1) im ersten Seitenbereich (5) und im zweiten Seitenbereich (6) einen Winkel (14) im Bereich von 80° bis 90° und im Zentralbereich (7) einen Winkel (15) im Bereich von 5° bis 75° einschließt.

7. Fahrzeugluftreifen (1) nach dem vorhergehenden Anspruch, **dadurch gekennzeichnet, dass** die Reifenkarkasse (4) zwei Karkasslagen (8, 18) umfasst, wobei die gummierten Festigkeitsträger (9) der beiden Karkasslagen (8, 18) im Zentralbereich (7) relativ zueinander einen Winkel (20) im Bereich von 30° bis 90°, bevorzugt im Bereich von 40° bis 80°, besonders bevorzugt im Bereich von 50° bis 70°, ganz besonders bevorzugt im Bereich von 55° bis 65°, einschließen.

8. Fahrzeugluftreifen (1) nach einem der vorhergehenden Ansprüche, **dadurch gekennzeichnet, dass** im Fahrzeugluftreifen (1) zwischen dem Laufstreifen (10) und der Reifenkarkasse (4) zumindest eine weitere Lage (19), bevorzugt genau eine weitere Lage (19), angeordnet ist.

9. Fahrzeugluftreifen (1) nach einem der vorhergehenden Ansprüche, **dadurch gekennzeichnet, dass** der jeweilige radial äußere Seitenwandbereich (21) eine Gummierungsdicke (23) von 1,5 mm bis 5,0 mm aufweist und/oder der jeweilige radial innere Seitenwandbereich (22) eine Gummierungsdicke (23) von 2,0 mm bis 7,0 mm aufweist.

10. Fahrzeugluftreifen (1) nach einem der vorhergehenden Ansprüche, **dadurch gekennzeichnet, dass** der jeweilige radial innere Seitenwandbereich (22) mit dem jeweiligen radial äußeren Seitenwandbereich (21) in einem jeweiligen Kontaktbereich (24) stoffschlüssig verbunden ist.

11. Fahrzeugluftreifen (1) nach dem vorhergehenden Anspruch, **dadurch gekennzeichnet, dass** der jeweilige radial innere Seitenwandbereich (22) mit dem jeweiligen radial äußeren Seitenwandbereich (21) in dem jeweiligen Kontaktbereich (24) einen Stumpfstoß, einen Überlappstoß oder einen inversen Überlappstoß ausbildet.

12. Fahrzeugluftreifen (1) nach Anspruch 10 oder 11, **dadurch gekennzeichnet, dass** in den Reifenseitenwänden (12) eine weitere Komponente (25) angeordnet ist, wobei die jeweilige weitere Komponente (25) stoffschlüssig mit dem jeweiligen radial äußeren Seitenwandbereich (21) und dem jeweiligen radial inneren Seitenwandbereich (22) stoffschlüssig verbunden ist.

13. Fahrzeugluftreifen (1) nach dem vorhergehenden Anspruch, **dadurch gekennzeichnet, dass** die jeweilige weitere Komponente (25) eine höhere Shorehärte aufweist als der jeweilige radial innere Seitenwandbereich (22) und der jeweilige radial äußere Seitenwandbereich (21).

14. Fahrzeugluftreifen (1) nach Anspruch 12 oder 13, **dadurch gekennzeichnet, dass** die jeweilige weitere Komponente (25) eine Shore-A-Härte von 75 bis 100 Punkten aufweist, wobei die weitere Komponente (25) eine um mindestens 5 Punkte höhere Shore-A-Härte aufweist als der jeweilige radial innere Seitenwandbereich (22) und eine um mindestens 10 Punkte höhere Shore-A-Härte aufweist als der jeweilige radial äußere Seitenwandbereich (21).
